(19) Europäisches Patentamt
European Patent Office
Office européen des brevets

(11) **EP 2 188 328 B1**

(12) **EUROPÄISCHE PATENTSCHRIFT**

(45) Veröffentlichungstag und Bekanntmachung des Hinweises auf die Patenterteilung:
**27.02.2013 Patentblatt 2013/09**

(21) Anmeldenummer: **08803016.8**

(22) Anmeldetag: **12.08.2008**

(51) Int Cl.:
*C08J 5/18* (2006.01)     *C03C 1/00* (2006.01)
*C03C 17/00* (2006.01)

(86) Internationale Anmeldenummer:
**PCT/EP2008/060592**

(87) Internationale Veröffentlichungsnummer:
**WO 2009/037055 (26.03.2009 Gazette 2009/13)**

(54) **TRANSPARENTE PORÖSE SiO2-BESCHICHTUNG FÜR EIN TRANSPARENTES SUBSTRATMATERIAL MIT VERBESSERTEN OPTISCHEN EIGENSCHAFTEN.**

TRANSPARENT POROUS SiO2-COATING FOR A TRANSPARENT SUBSTRATE MATERIAL HAVING IMPROVED OPTICAL PROPERTIES

REVÊTEMENT SiO2 POREUX TRANSPARENT POUR MATÉRIAU SUBSTRAT TRANSPARENT AYANT DES PROPRIÉTÉS OPTIQUES AMÉLIORÉES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.09.2007   DE 102007043653**

(43) Veröffentlichungstag der Anmeldung:
**26.05.2010   Patentblatt 2010/21**

(73) Patentinhaber: **Siemens Aktiengesellschaft
80333 München (DE)**

(72) Erfinder: **EDER, Florian
91052 Erlangen (DE)**

(74) Vertreter: **Wolff, Harry et al
Siemens Aktiengesellschaft
Postfach 22 16 34
80506 München (DE)**

(56) Entgegenhaltungen:
**DE-A1-102005 020 168**

**Beschreibung**

Die vorliegende Erfindung bezieht sich auf das Gebiet der transparenten Materialien, insbesondere der transparenten Materialien, deren Reflexion vermindert wurde.

Bei vielen transparenten Materialien, insbesondere transparenten Materialien auf Kunststoffbasis, wie beispielsweise Polycarbonat etc. ergibt sich die Schwierigkeit, dass diese zum Teil unerwünschte Reflexionseigenschaften haben, welche den Einsatz bei vielen Anwendungen erschweren oder sogar unmöglich machen.

Daher wurden zahlreiche Versuche unternommen, transparente Materialien insbesondere durch Aufbringen weiterer Schichten weniger reflektiv zu gestalten.

Hierzu wurde z.B. vorgeschlagen, durch eine sog "flower-like alumina"-Schicht die Reflexion zu vermindern (siehe Yamaguchi et al, Journal of Sol-Gel Science & Technology, 2005, 33, 117-120). Diese Herangehensweise erfordert jedoch einen Temperschritt bei erhöhten Temperaturen (ca. 400 °C).

Andere vorgeschlagene Beschichtungen umfassen Mehrschichtsysteme mit wechselnden Brechungsindices, z.B. Multischichtsysteme aus $SiO_2$ und $TiO_2$. Auch hier sind jedoch Temperschritte, meist bei Temperaturen über 400°C notwendig (siehe M. Walther, OTTI-Seminar Regensburg, September 2005). Andere Systeme verwenden Schichten aus $TiO_2$ und $MgF_2$ (siehe EP 564 134 B1), bei denen zusätzlich Fluorkohlenwasserstoffharze vorgesehen sind. Der Nachteil dieses Systems liegt wiederum in der schlechten Aufbringbarkeit.

Es stellt sich somit die Aufgabe, eine transparente Beschichtung für ein transparentes Substratmaterial zu schaffen, welche die oben angesprochenen Nachteile zumindest teilweise überwindet und insbesondere auf einfache Weise aufbringbar ist.

Diese Aufgabe wird durch eine transparente Beschichtung nach Anspruch 1 sowie durch das Verfahren nach Anspruch 6 gelöst.

Demgemäß wird eine transparente Beschichtung für ein transparentes Substratmaterial vorgeschlagen, welche dadurch gekennzeichnet ist, dass die Beschichtung auf $SiO_2$ basiert, sowie eine Porosität von ≥35% bis ≤65% und die Transmission nach Wischtest ≥95% beträgt.

Die Bezeichnung "basierend auf $SiO_2$" im Sinne der vorliegenden Erfindung bedeutet oder umfasst insbesondere, dass die Beschichtung $SiO_2$ als Hauptkomponente enthält. Bevorzugt sind dabei ≥70%, noch bevorzugt ≥80% sowie am meisten bevorzugt ≥90% bis ≤100 der Beschichtung aus $SiO_2$.

Die Bezeichnung "transparent" im Sinne der vorliegenden Erfindung bedeutet oder umfasst dabei insbesondere eine Durchlässigkeit von ≥90% im jeweilig verwendeten Wellenlängenbereich, insbesondere im sichtbaren Wellenlängenbereich.

Die Bezeichnung "Transmission nach Wischtest" bezieht sich insbesondere auf die Messung der Transmission nach Wischtest, wie im Methodenteil beschrieben.

Durch eine solche erfindungsgemäße $SiO_2$-Beschichtung kann in vielen Anwendungen innerhalb der vorliegenden Erfindung einer oder mehrere der folgenden Vorteile erzielt werden:

- Die Beschichtung ist für das menschliche Auge im Wesentlichen homogen und für viele Anwendungen reicht eine einzige Beschichtung aus (anders als bei den oben aufgeführten Mehrschichtsystemen).

- Die Beschichtung kann - wie im Folgenden noch beschrieben wird - bei den meisten Anwendungen innerhalb der vorliegenden Erfindung durch einfaches Tauchen aufgebracht und nachfolgende Plasmabehandlung zu ihrer gewünschten Porosität gebracht werden, so dass aufwendige und insbesondere bei hoher Temperatur durchzuführende Aufbringungsschritte vermieden werden können.

- Die Dicke der hergestellten Beschichtung beträgt - wie im Folgenden noch beschrieben wird - bei vielen Anwendungen im Bereich von 50- 200 Nanometern. Sie ist daher weitgehend unempfindlich gegenüber thermischem und mechanischem Stress (insbesondere Biegebelastung) und beeinflusst Bauteilabmessungen und Toleranzen nur unwesentlich.

Gemäß einer mehr bevorzugten Ausführungsform beträgt die Porosität der Beschichtung ≥40% bis ≤60%, noch bevorzugt ≥45% bis ≤55%.

Gemäß einer bevorzugten Ausführungsform beträgt die Transmission nach Wischtest ≥97%.

Eine bevorzugte Ausführungsform der Erfindung ist dadurch gekennzeichnet, dass die Dicke der Beschichtung bei ≥90 nm bis ≤130 nm liegt. Dies hat sich für viele Anwendungen als besonders günstig herausgestellt. Bevorzugt liegt die Dicke der Beschichtung bei ≥95 nm bis ≤115 nm.

Eine bevorzugte Ausführungsform der Erfindung ist dadurch gekennzeichnet, dass der Brechungsindex $n_1$ der Beschichtung bei ≥0,8 * $\sqrt{n_2}$ bis ≤1,2 * $\sqrt{n_2}$ liegt, wobei $n_2$ der Brechungsindex des Substrats ist. In diesem Fall kann für viele Anwendungen innerhalb der vorliegenden Erfindung die Reflexion nochmals vermindert werden. Bevorzugt liegt der Brechungsindex $n_1$ der Beschichtung bei ≥0,9 * $\sqrt{n_2}$ bis <1,1 * $\sqrt{n_2}$ .

Eine bevorzugte Ausführungsform der Erfindung ist dadurch gekennzeichnet, dass die Beschichtung im Wesentlichen ein poröser Vollformkörper, insbesondere ein homogener poröser Vollformkörper ist bzw. einen solchen Körper bildet.

Der Term "im wesentlichen" bezeichnet dabei insbesondere ≥90 Vol-%, bevorzugt ≥95 Vol-% der Beschichtung.

Dadurch kann bei vielen Anwendungen innerhalb der vorliegenden Erfindung eine einfach herstellbare und noch weiter reflexionsmindernde Beschichtung erreicht werden.

Eine bevorzugte Ausführungsform der Erfindung ist dadurch gekennzeichnet, dass die Beschichtung transmissionserhöhende Eigenschaften, insbesondere für Licht im sichtbaren Wellenlängenbereich, aufweist.

Bevorzugt ist die Beschichtung in der Lage, die Transmission des Substrates um ≥2%, bevorzugt um ≥4% im jeweilig verwendeten Wellenlängenbereich, insbesondere im sichtbaren Wellenlängenbereich zu erhöhen.

Eine bevorzugte Ausführungsform der Erfindung ist dadurch gekennzeichnet, dass der durchschnittliche Durchmesser der Poren von ≥1 nm bis ≤50 nm beträgt. Dies hat sich bei vielen Anwendungen der vorliegenden Erfindung als besonders günstig für die anti-reflektiven Eigenschaften der Beschichtung herausgestellt. Bevorzugt beträgt der durchschnittliche Durchmesser der Poren von ≥2 nm bis ≤40 nm, noch bevorzugt ≥3 nm bis ≤20 nm.

Eine bevorzugte Ausführungsform der Erfindung ist dadurch gekennzeichnet, dass der Durchmesser von ≥90% der Poren von ≥1 nm bis ≤50 nm beträgt.

Eine bevorzugte Ausführungsform der Erfindung ist dadurch gekennzeichnet, dass die Durchmesserverteilung der Poren der erfindungsgemäßen Beschichtung im wesentlichen einer log-norm Verteilung mit einer Halbwertsbreite von ≤20 nm, bevorzugt ≤10 nm, noch bevorzugt ≤8 nm folgt.

"Im Wesentlichen" bedeutet dabei, dass ≥90% der Poren, bevorzugt ≥95% der Poren sowie am meisten bevorzugt ≥98% der Poren dieser Verteilung folgen.

Eine derartige Verteilung hat sich für viele Anwendungen der vorliegenden Erfindung als besonders günstig herausgestellt, da so eine optisch besonders homogene Beschichtung erreicht werden kann.

Eine bevorzugte Ausführungsform der Erfindung ist dadurch gekennzeichnet, dass die Beschichtung mittels eines Sol-Gel-Verfahrens und nachfolgender Plasmabehandlung hergestellt wird.

Die vorliegende Erfindung bezieht sich außerdem auf ein Verfahren zur Herstellung einer transparenten Beschichtung für ein transparentes Substratmaterial, dadurch gekennzeichnet, dass das Verfahren auf einem Sol-Gel-Prozess beruht.

Die Bezeichnung "Sol-Gel-Prozess oder Sol-Gel-Verfahren" im Sinne der vorliegenden Erfindung bedeutet oder umfasst insbesondere alle Prozesse und/oder Verfahren bei denen Metallprecursormaterialien, insbesondere Metallhalogenide und/oder Metallalkoxide in Lösung einer Hydrolyse und anschließenden Kondensation unterworfen werden.

Die Bezeichnung "Plasmabehandlung" im Sinne der vorliegenden Erfindung bedeutet oder umfasst insbesondere alle Prozesse und/oder Verfahren, bei denen ionisierte Moleküle, insbesondere Radikale eines Gases, welche durch eine Energiequelle wie Hochfrequenz oder Mikrowellen erzeugt wurden, auf das Substrat einwirken. Meist ist dies mit einer Temperaturerhöhung verbunden.

Überraschenderweise hat sich herausgestellt, dass bei Beschichtungen und/oder Substraten durch Plasmabehandlung bei vielen Anwendungen nochmals eine wesentliche Verbesserung der Oberflächenqualität sowie weiterer Eigenschaften erreicht werden kann.

Es sei angemerkt, dass unter "Plasmabehandlung" im Sinne der vorliegenden Erfindung insbesondere auch eine Coronabehandlung fällt, auch wenn dies im Sprachgebrauch oftmals anders gehandhabt wird. Eine Plasmabehandlung im Sinne der vorliegenden Erfindung umfasst somit explizit auch eine Koronabehandlung; dies stellt insbesondere eine bevorzugte Ausführungsform der Erfindung dar.

Gemäß einer bevorzugten Ausführungsform der Erfindung wird die Plasmabehandlung als Atmosphärendruckplasma durchgeführt. Dies hat sich bei vielen Anwendungen der vorliegenden Erfindung als sehr vorteilhaft erwiesen.

Die Bezeichnung "Atmosphärendruckplasma" im Sinne der vorliegenden Erfindung bedeutet oder umfasst insbesondere alle Prozesse und/oder Verfahren, bei denen ein Plasma unter atmosphärischen Umgebungsbedingungen auf das Substrat aufgebracht wird.

Bevorzugt wird die Plasmabehandlung bei einem Prozessgasdruck von ≥2 bar bis ≤8 bar durchgeführt. Dies hat sich bei vielen Anwendungen der vorliegenden Erfindung als vorteilhaft herausgestellt. Bevorzugt liegt der Prozessgasdruck bei ≥3 bar bis ≤6 bar, bevorzugt ≥3,5 bar bis ≤5 bar.

Bevorzugt wird die Plasmabehandlung unter Hochspannung und/oder Rotation der Düse durchgeführt.

Eine bevorzugte Ausführungsform der Erfindung ist dadurch gekennzeichnet, dass während zumindest eines Teils des Sol-Gel-Prozesses mindestens eine porositätsverursachende Komponente vorhanden ist, die nach Beendigung des Sol-Gel-Prozesses entfernt und/oder zerstört wird.

Bevorzugt wird die porositätsverursachende Komponente zumindest zum Teil mittels der Plasmabehandlung entfernt und/oder zerstört.

Eine bevorzugte Ausführungsform der Erfindung ist dadurch gekennzeichnet, dass die mindestens eine porositätsverursachende Komponente ein Polymer ist, wobei die durchschnittliche Molmasse des Polymers bevorzugt ≥5.000 Da bis ≤50.000 Da, noch bevorzugt ≥10.000 Da bis ≤35.000 Da beträgt.

Eine bevorzugte Ausführungsform der Erfindung ist dadurch gekennzeichnet, dass das Polymer ein organisches Polymer, bevorzugt ausgewählt aus der Gruppe enthaltend Polyethylenglykol, Polypropylenglykol, Copolymere aus Polyethylenglykol und Polypropylenglykol, Polyvinylpyrrolidon, Polyether, alkyl-, cycloalkyl- und/oder arylsubstituierte Polyether, Polyester, alkyl-, cycloalkyl- und/oder arylsubstituierte Polyester, insbesondere Polyhydroxybuttersäure oder Mischungen daraus.

Allgemeine Gruppen/ Moleküldefinition: Innerhalb der Beschreibung und den Ansprüchen werden allgemeine Gruppen oder Moleküle, wie z.B. Alkyl, Alkoxy, Aryl etc. beansprucht und beschrieben. Wenn nicht anders beschrieben, werden bevorzugt die folgenden Gruppen innerhalb der allgemein beschriebenen Gruppen/Moleküle im Rahmen der vorliegenden Erfindung verwendet:

Alkyl: lineare und verzweigte C1-C8-Alkyle,

langkettige Alkyle: lineare und verzweigte C5-C20 Alkyle

Alkenyl: C2-C6-alkenyl,

Cycloalkyl: C3-C8-cycloalkyl,

Alkoxid/Alkoxy: C1-C6-alkoxy, linear und verzweigt

langkettig Alkoxid/Alkoxy: lineare und verzweigte C5-C20 Alkoxy

Aryl: ausgewählt aus Aromaten mit einem Molekulargewicht unter 300 Da.

Polyether: ausgewählt aus der Gruppe enthaltend $H\text{-}(O\text{-}CH_2\text{-}CH(R))_n\text{-}OH$ and $H\text{-}(O\text{-}CH_2\text{-}CH(R))_n\text{-}H$ wobei R unabhängig ausgewählt ist aus: Wasserstoff, Alkyl, Aryl, Halogen und n von 1 to 250

Substituierte Polyether: ausgewählt aus der Gruppe enthaltend $R_2\text{-}(O\text{-}CH_2\text{-}CH(R_1))_n\text{-}OR_3$ and $R_2\text{-}(O\text{-}CH_2\text{-}CH(R_2))_n\text{-}R_3$ wobei $R_1$, $R_2$, $R_3$ unabhängig ausgewählt ist aus: Wasserstoff, Alkyl, langkettige Alkyle, Aryl, Halogen und n von 1 to 250 beträgt

Ether: Die Verbindung $R_1\text{-}O\text{-}R_2$, wobei jedes $R_1$ und $R_2$ unabhängig ausgewählt sind aus der Gruppe enthaltend Wasserstoff, Halogen, Alkyl, Cycloalkyl, Aryl, langkettiges Alkyl

Soweit nicht anders erwähnt, sind die folgenden Gruppen/Moleküle mehr bevorzugte Gruppen/Moleküle innerhalb der allgemeinen Gruppen/Moleküldefinition:

Alkyl: lineare und verzweigte C1-C6-alkyl,

Alkenyl: C3-C6-alkenyl,

Cycloalkyl: C6-C8-cycloalkyl,

Alkoxy, Alkoxid: Cl-C4-alkoxy, insbesondere Isopropyloxid

langkettig Alkoxy: lineare und verzweigte C5-C10 Alkoxy, vorzugsweise lineare C6-C8 Alkoxy

Polyether: ausgewählt aus der Gruppe enthaltend $H\text{-}(O\text{-}CH_2\text{-}CH(R))_n\text{-}OH$ and $H\text{-}(O\text{-}CH_2\text{-}CH(R))_n\text{-}H$ wobei R unabhängig ausgewählt ist aus: Wasserstoff, alkyl, aryl, halogen und n von 10 bis 250 beträgt.

Substituierte Polyether: ausgewählt aus der Gruppe enthaltend $R_2\text{-}(O\text{-}CH_2\text{-}CH(R_1))_n\text{-}OR_3$ and $R_2\text{-}(O\text{-}CH_2\text{-}CH(R_2))_n\text{-}R_3$ wobei $R_1$, $R_2$, $R_3$ unabhängig ausgewählt ist aus: Wasserstoff, Alkyl, langkettige Alkyle, Aryl, halogen und n von 10 bis 250.

Eine bevorzugte Ausführungsform der Erfindung ist dadurch gekennzeichnet, dass das Silizium in Form einer Silizium-Alkoxid-Precursor-Lösung zugegeben wird.

Eine bevorzugte Ausführungsform der Erfindung ist dadurch gekennzeichnet, dass der pH-Wert der Silizium enthaltenden Precursor-Lösung von ≥1 bis ≤6 beträgt.

Die Erfindung bezieht sich außerdem auf eine transparente Beschichtung für ein transparentes Substrat, hergestellt nach dem erfindungsgemäßen Verfahren.

Die Erfindung bezieht sich außerdem auf ein optisches Bauelement umfassend ein transparentes Substrat sowie eine auf dem Substrat aufgebrachte und/oder angeordnete Beschichtung gemäß der vorliegenden Erfindung

Eine bevorzugte Ausführungsform der Erfindung ist dadurch gekennzeichnet, dass das Substrat ausgewählt ist aus der Gruppe enthaltend Glas, transparente Kunststoffe, bevorzugt ausgewählt aus der Gruppe enthaltend Polycarbonat, Polyacryl, PMMA und Mischungen daraus, sowie Mischungen daraus.

Die vorliegende Erfindung bezieht sich außerdem auf ein Verfahren zur Herstellung eines erfindungsgemäßen optischen Bauelements, dadurch gekennzeichnet, dass die Beschichtung auf das Substrat durch Tauchen und/ oder Spin-coating aufgebracht und nachfolgend einer Plasmabehandlung unterworfen wird.

Die vorliegende Erfindung bezieht sich außerdem auf die Verwendung einer erfindungsgemäßen Beschichtung und/oder eines erfindungsgemäßen optischen Bauelements für

- optische Instrumente
- Brillen
- Scheinwerfergehäuse in der Automobiltechnik
- Scheiben, besonders in der Automobiltechnik
- Cockpitverglasungen

Die vorgenannten sowie die beanspruchten und in den Anwendungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in denen - beispielhaft - ein Ausführungsbeispiel einer erfindungsgemäßen Beschichtung dargestellt ist. In den Zeichnungen zeigt:

Fig. 1    ein Diagramm mit drei Transmissionsmessungen einer gemäß einer ersten Ausführungsform der Erfindung beschichteten Polycarbonatsubstrats, eines gemäß eines Vergleichsverfahren beschichten Polycarbonatsubstrats und eines unbeschichteten Polycarbonatsubstrates.

Fig. 2    zeigt den Kopf einer Plasmakanone mit austretendem Plasma und eine Gesamtansicht der Plasmakanone.

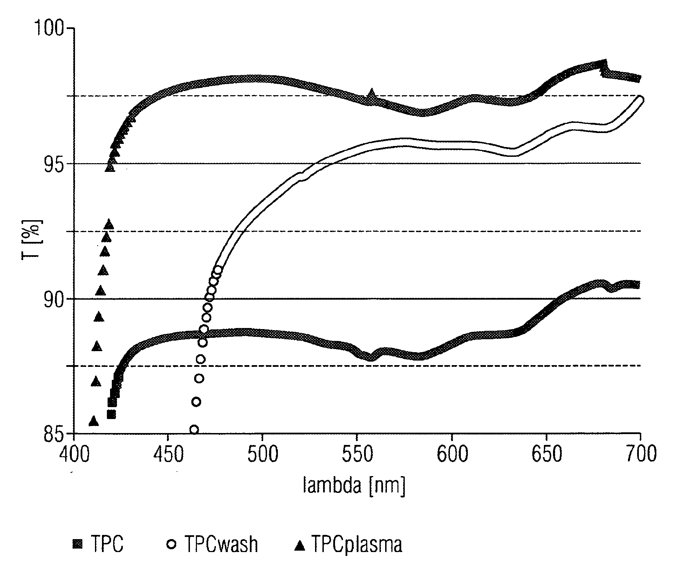

Fig.1 und 2 beziehen sich auf das im Folgenden beschriebene Beispiel I:

BEISPIEL I:

Ein optisches Bauelement auf Polycarbonatbasis wurde wie folgt hergestellt:

Zunächst wurden zwei Lösungen bereitgestellt:

Lösung 1: 4g Polyethylenglykol (Molmasse 35000 Da) wurden in 50ml Ethanol bereitgestellt und solange unter Rühren langsam Wasser zugegeben, bis vollständige Lösung eintritt. Anschließend werden 4 Tropfen 1N HCl zugesetzt.

Lösung 2: 4ml Tetraethoxysilan in 20 ml EtOH

Lösung 2 wurde dann mit Lösung 1 auf 50 ml aufgefüllt und 2h gerührt.

Das Polycarbonatsubstrat wurde anschließend mit der Lösung tauchbeschichtet (Geschwindigkeit 55 mm/min). Danach wurde an der Luft getrocknet und bei 100°C für 1h im Ofen getempert. Nach dem Abkühlen wurde 1 min in Wasser gelagert.

Anschließend wurde die Beschichtung einer Plasmabehandlung unterzogen, dabei wurde ein Gerät der Fa. Plasmatreat mit einem Hochfrequenzgenerator FG 3001 und einer Rotationsdüse RD 1004, die mit einem Düsenkopf Typ AGR123 bestückt war, benutzt.

Die Porosität der Beschichtung betrug dabei 55 %, die Transmission nach Wischtest betrug 97%.

VERGLEICHSBEISPIEL I:

Zum Vergleich wurde eine zweite Beschichtung hergestellt, wobei die Plasmabehandlung weggelassen wurde.

Fig. 1 zeigt ein Diagramm mit drei Transmissionsmessungen eines Polycarbonatsubstrats nach Beispiel I ("TPC plasma"), eines Polycarbonatsubstrats gemäß Vergleichsbeispiel I ("TPC wash") und eines unbeschichteten Polycarbonatsubstrates ("TPC"). Man sieht sowohl gegenüber dem Vergleichsverfahren sowie dem unbeschichteten Substrat eine deutliche Verbesserung der Transmission, insbesondere im Wellenlängenbereich um 400-450 nm.

Figur 2 zeigt das Funktionsprinzip eines Atmosphärendruckplasmas, das hauptsächlich darin besteht, dass bei Normaldruck ohne extra Reaktionsgefäß, das für die Aufrechterhaltung eines zum Atmosphärendruck unterschiedlichen Druckniveaus sorgt, durch eine Koronaentladung ein Plasma erzeugt wird.

Herzstück ist der Plasmaerzeuger, in dem die Zentralelektrode 3, die äußere, potentialfreie Elektrode 5 und der Isolator 4 eine Entladungszone bilden. Der Hochspannungsgenerator 9 wandelt nun die Netzspannung in die Hochspannung (5-15 kV, 10-100 kHz) um, die einen gepulsten Lichtbogen 7 erzeugt. Die Versorgungsspannung 13 und das Prozessgas 10, das gewöhnlich ölfreie Druckluft ist, werden der Entladungszone durch den flexiblen Gaskanal 6 zugeführt. Die Druckluft gelangt dabei zunächst über den Druckluftanschluss 11 in den Gassteuerungsblock 12. Das Gas wird durch ein flexibles Rohr 8, in dem Gas- und Stromzuleitungen zur Entladungszone untergebracht sind, über den Gaskanal 6 an der Entladungsstrecke vorbeigeführt und in der Entladungszone in den Plasmazustand angeregt. Der Luftstrom trägt die entstehenden aktiven Spezies (i$^+$, e$^-$, r$^*$) die im Lichtbogen 7 entstehen, aus der Entladungszone heraus. Es es gibt einen potentialfreien Plasmastrahl (Aktivgasstrahl).

Wischtest

Die Transmission nach Wischtest der Beschichtungen wurde auf folgende Weise gemessen:

Ein 180g schwerer Hammer, an dessen einen Ende mittels Klebeband ein mit einem Standard-Reinigungsmittel "Sidolin Streifenfrei Zitrus" (Fa. Henkel) getränktes Standard-Reinigungsvlies der Fa. Clear-Clean "Absormat" befestigt war, wurde je Probenseite 50mal, ohne weitere vertikale Krafteinwirkung über die jeweilige Beschichtung gezogen.

Anschließend wurde die Transmission der Beschichtung im "Haze-Guard PLUS" (Fa. Byk- Gardner) gemessen.

**Patentansprüche**

1. Transparente Beschichtung für ein transparentes Substratmaterial, **dadurch gekennzeichnet, dass** die Beschichtung auf $SiO_2$ basiert, eine Porosität von $\geq$35% bis $\leq$65% und die Transmission nach Wischtest $\geq$95% beträgt

2. Beschichtung nach Anspruch 1, **dadurch gekennzeichnet, dass** die Dicke der Beschichtung von $\geq$90 nm bis $\leq$130 nm liegt.

3. Beschichtung nach Anspruch 1 oder 2, **dadurch gekennzeichnet, dass** der Brechungsindex $n_1$ der Beschichtung von $\geq 0.8 * \sqrt{n_2}$ bis $\leq 1{,}2 * \sqrt{n_2}$ liegt, wobei $n_2$ der Brechungsindex des Substrats ist.

4. Beschichtung nach Anspruch 1 bis 3, **dadurch gekennzeichnet, dass** die Beschichtung ein poröser Vollformkörper ist.

5. Beschichtung nach einem der Ansprüche 1 bis 4, **dadurch gekennzeichnet, dass** die $SiO_2$- Beschichtung mittels eines Sol-Gel-Verfahrens und nachfolgender Plasmabehandlung hergestellt wird.

6. Verfahren zur Herstellung einer transparenten Beschichtung nach einem der Ansprüche 1 bis 5, **dadurch gekennzeichnet, dass** das Verfahren auf einem Sol-Gel-Prozess und nachfolgender Plasmabehandlung beruht.

7. Verfahren nach Anspruch 6, wobei die Plasmabehandlung bei einem Prozessgasdruck von $\geq$2 bar bis $\leq$8 bar durchgeführt wird.

8. Verfahren nach Anspruch 6 oder 7, **dadurch gekennzeichnet, dass** während zumindest eines Teils des Sol-Gel-Prozesses mindestens eine porositätsverursachende Komponente vorhanden ist, die nach Beendigung des Sol-Gel-Prozesses vorzugsweise mittels der Plasmabehandlung entfernt und/oder zerstört wird.

9. Optisches Bauelement umfassend ein transparentes Substrat sowie eine auf dem Substrat aufgebrachte und/oder angeordnete Beschichtung nach einem der vorigen Ansprüche.

10. Optisches Bauelement nach Anspruch 9, **dadurch gekennzeichnet, dass** das Substrat ausgewählt ist aus der Gruppe enthaltend Glas, transparente Kunststoffe, bevorzugt ausgewählt aus der Gruppe enthaltend Polycarbonat, Polyacryl und Mischungen daraus, sowie Mischungen daraus.

11. Verfahren zur Herstellung eines optischen Bauelementes nach einem der Ansprüche 9 oder 10, **dadurch gekennzeichnet, dass** die Beschichtung auf das Substrat durch Tauchen und/oder Spin-Coating aufgebracht und nachfolgend einer Plasmabehandlung unterworfen wird.

12. Verwendung einer Beschichtung gemäß einem oder mehrere der Ansprüche 1 bis 5, eines optischen Bauelements gemäß Anspruch 9 oder 10 für

    - optische Instrumente
    - Brillen
    - Scheinwerfergehause in der Automobiftechnik
    - Scheiben, besonders in der Automobiltechnik
    - Cockpitverglasungen.

**Claims**

1. Transparent coating for a transparent substrate material, **characterised in that** the coating is based on $SiO_2$, has a porosity of $\geq$35% to $\leq$65% and the transmission according to the wipe test amounts to $\geq$95%.

2. Coating according to claim 1, **characterised in that** the thickness of the coating is between $\geq$90 nm to $\leq$130 nm.

3. Coating according to claim 1 or 2, **characterised in that** the refractive index $n_1$ of the coating lies between $\geq 0.8 * \sqrt{n_2}$ and $\leq 1.2* \sqrt{n_2}$ , with $n_2$ being the refractive index of the substrate.

4. Coating according to claim 1 to 3, **characterised in that** the coating is a porous full mould body.

5. Coating according to one of claims 1 to 4, **characterised in that** the $SiO_2$ coating is produced by means of a Sol-Gel method and subsequent plasma treatment.

6. Method for producing a transparent according to one of claims 1 to 5, **characterised in that** the method relates to a Sol-Gel process and subsequent plasma treatment.

7. Method according to claim 6, with the plasma treatment being implemented with a process gas pressure of $\geq$2 bar to $\leq$ 8 bar.

8. Method according to claim 6 or 7, **characterised in that** at least one porosity-producing component exists during at least one part of the Sol-Gel process, said component preferably being removed and/or destroyed by means of the plasma treatment upon termination of the Sol-Gel process.

9. Optical component comprising a transparent substrate and a coating applied and/or arranged on the substrate according to one of the preceding claims.

10. Optical component according to claim 9, **characterised in that** the substrate is selected from the group containing glass, transparent plastic, preferably selected from the group containing polycarbonate, polyacryl and mixtures thereof, as well as mixtures thereof.

11. Method for producing an optical component according to one of claims 9 or 10, **characterised in that** the coating is applied to the substrate by means of dip-coating and/or spin-coating and is then subjected to a plasma treatment.

12. Use of a coating according to one or several of claims 1 to 5, and of an optical component according to claim 9 or 10, for

- optical instruments
- spectacles
- headlamp housing in automotive engineering
- window glass, particularly in automotive engineering
- cockpit glazing

## Revendications

1. Enduction transparente pour une matière de substrat transparente, **caractérisée en ce que** l'enduction est à base de $SiO_2$, et possède une porosité de $\geq 35\ \%$ à $\leq 65\ \%$ et une transmission $\geq 95\ \%$ conformément au test d'essuyage.

2. Enduction selon la revendication 1, **caractérisée en ce que** l'épaisseur de l'enduction s'élève de $\geq 90$ nm à $\leq 130$ nm.

3. Enduction selon la revendication 1 ou 2, **caractérisée en ce que** l'indice de diffraction $n_1$ de l'enduction s'élève de $\geq 0{,}8 * \sqrt{n_2}$ à $\leq 1{,}2 * \sqrt{n_2}$, $n_2$ représentant l'indice de diffraction du substrat.

4. Enduction selon l'une quelconque des revendications 1 à 3, **caractérisée en ce que** l'enduction représente un corps moulé positif poreux.

5. Enduction selon l'une quelconque des revendications 1 à 4, **caractérisée en ce qu'**on obtient l'enduction à base de $SiO_2$ via un procédé sol-gel et par traitement ultérieur au plasma.

6. Procédé pour la fabrication d'une enduction transparente selon l'une quelconque des revendications 1 à 5, **caractérisé en ce que** le procédé s'appuie sur un processus sol-gel et sur un traitement ultérieur au plasma.

7. Procédé selon la revendication 6, dans lequel on effectue le traitement au plasma sous une pression de gaz de travail de $\geq 2$ à $\leq 8$ bar.

8. Procédé selon la revendication 6 ou 7, **caractérisé en ce que**, pendant aux moins une partie du processus sol-gel, est présent au moins un composant conférant une porosité, que l'on élimine et/ou que l'on détruit au terme du processus sol-gel, de préférence au moyen du traitement au plasma.

9. Composant optique comprenant un substrat transparent ainsi qu'une enduction appliquée et/ou disposée sur le substrat, selon l'une quelconque des revendications précédentes.

10. Composant optique selon la revendication 9, **caractérisé en ce que** le substrat est choisi parmi le groupe contenant du verre, des matières synthétiques transparentes de préférence choisies parmi le groupe contenant du polycarbonate, un composé polyacrylique et leurs mélanges, ainsi que leurs mélanges.

11. Procédé pour la fabrication d'un composant optique selon l'une quelconque des revendications 9 ou 10, **caractérisé en ce qu'**on applique l'enduction par immersion et/ou par centrifugation, et on la soumet ensuite à un traitement au plasma.

12. Utilisation d'une enduction selon une ou plusieurs des revendications 1 à 5, d'un composant optique selon la revendication 9 ou 10 pour :

- des instruments optiques ;
- des lunettes ;
- des boîtiers de phares dans la construction automobile ;
- des vitres, en particulier dans la construction automobile ;
- des vitrages pour cockpit.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 564134 B1

**In der Beschreibung aufgeführte Nicht-Patentliteratur**

- **YAMAGUCHI et al.** *Journal of Sol-Gel Science & Technology,* 2005, vol. 33, 117-120

- **M. WALTHER.** *OTTI-Seminar Regensburg,* September 2005